# EUROPEAN PATENT APPLICATION

(11) **EP 1 441 314 A1**
(43) Date of publication of application: **28.07.2004**
(21) Application number: 03255047.7
(22) Date of filing: 14.08.2003
(51) Int. Cl.: G07F 19/00

(54) **Credit reservation transactions in a prepaid electronic commerce system**

(30) Priority: 22.01.2003 US 349119
(71) Applicant: LUCENT TECHNOLOGIES INC., Murray Hill, New Jersey 07974-0636 (US)
(72) Inventor: Yigang, Cai, Naperville, Illinois 60565 (US); Sunil, Thadani, Naperville, Illinois 60540 (US)
(74) Representative: Watts, Christopher Malcolm Kelway, Dr.

(57) **Abstract**

A network-based e-commerce system 100, 200 contains one or more service control points (SCPs) 122, 206 for establishing and maintaining credit reservation accounts associated with a plurality of prepaid subscribers. The credit reservation accounts are dedicated for payment, if at all, to particular service (content) providers. Service (content) providers access the credit reservations via a gateway device 104, 204.

## Description

### FIELD OF THE INVENTION

This invention relates generally to the field of electronic commerce (or "e-commerce) and, more particularly, to an intelligent network-based prepaid e-commerce system.

### BACKGROUND OF THE INVENTION

Communication networks such as the Internet are known to interconnect communication devices spanning a large geographical area. Generally, the Internet (sometimes referred to as the World Wide Web) is a combination of local area networks (LANs) and wide area networks (WANs) that speak the same protocols, thereby allowing a variety of communication devices connected to the Internet to communicate with each other. The suite of protocols used on the Internet is known as Transmission Control (TCP)/Internet Protocol (IP) (or TCP/IP). Communication devices that may access the Internet include, for example, computers, cell phones, wireline phones, pagers, two-way radios and personal digital assistants (PDAs). The communication devices connect to the Internet using access technologies such as Ethernet, telephone wires, base radios, satellites or Asynchronous Transfer Mode (ATM) networks.

As is well known, users of communication devices connected to the Internet may surf through a variety of web sites hosted by business enterprises, government entities, financial and educational institutions and the like. Certain of these sites are known to offer goods or services for sale that may be purchased electronically by the Internet user (i.e., by performing point-and-click, keystrokes and the like via the user device). This type of sales transaction is known generally as electronic commerce, or e-commerce. Presently, the most common form of e-commerce transaction is known as a "postpaid" transaction whereby the customer, having selected item(s) or service(s) for purchase, enters a credit card number to effect payment. (Alternatively, the customer may have entered a credit card in an earlier transaction and the seller maintained a record of the card.) Thereafter, the seller verifies the credit card authorization, delivers the selected goods or service and obtains payment from the credit card company. The customer pays the credit card company some time later.

An alternative form of e-commerce transaction, known as "prepaid" service allows customers to pay up front for a certain level of goods or services (rather than paying a bill some time later), giving the customer the opportunity to perform e-commerce transactions until such time as the credit level in the prepaid account is depleted.

A problem that arises is that since a user may rely upon a prepaid account for funding multiple services from different service providers, it is possible that certain service provider(s) may be delivering service(s) to a user just as other service providers or merchants are charging the account. Hence, most particularly in the case of network-based services such as Internet charges, file uploads/downloads, wireless services charges and the like (where the charges are not known until the service or content has been delivered to the user), a service provider may deliver a service to a user in anticipation of charging the account after delivery of the service, only to discover that there are insufficient funds in the account to pay for the service. To reduce or eliminate occurrences of service delivery to customers with insufficient funds and associated loss of revenue to the service providers, it would be desirable for service providers to obtain credit reservation(s) from within the prepaid account which guarantee a certain amount of payment in advance or during or after service delivery, and which may not be accessed by other service providers or merchants charging the prepaid account.

### SUMMARY OF THE INVENTION

The present invention provides system and method embodiments for accommodating credit reservation transactions in an intelligent network-based e-commerce system. These transactions include establishing credit reservations, canceling previous credit reservations, using a credit reservation to obtain payment for services, auditing to remove expired reservations and modifying previous credit reservations. The credit reservations provide a means for payment that is reserved for a service provider having obtained the service reservation (i.e., not to any other service providers). In such manner, a service provider obtains assurance that it will be paid at least the amount of the credit reservation before it delivers a service to the subscriber.

### BRIEF DESCRIPTION OF THE DRAWINGS

The foregoing and other advantages of the invention will become apparent upon reading the following detailed description and upon reference to the drawings in which:
FIG. 1 is a block diagram of a prepaid e-commerce system incorporating a gateway server and which accommodates credit reservation transactions according to one embodiment of the present invention;
FIG. 2 is a block diagram of a prepaid e-commerce system incorporating a content provider interfacing directly to SCPs and which accommodates credit reservation transactions according to one embodiment of the present invention;
FIG. 3 is a flowchart of a method for establishing a credit reservation in the system of FIG. 1 or FIG. 2;
FIG. 4 is a flowchart of a method for canceling a previous credit reservation in the system of FIG. 1 or FIG. 2;
FIG. 5 is a flowchart of a method for obtaining payment for a service delivery using a credit reservation in the system of FIG. 1 or FIG. 2;
FIG. 6 is a flowchart of a method for canceling expired credit reservations in the system of FIG. 1 or FIG. 2; and
FIG. 7 is a flowchart of a method for changing a previous credit reservation in the system of FIG. 1 or FIG. 2.

### DESCRIPTION OF THE PREFERRED EMBODIMENT(S)

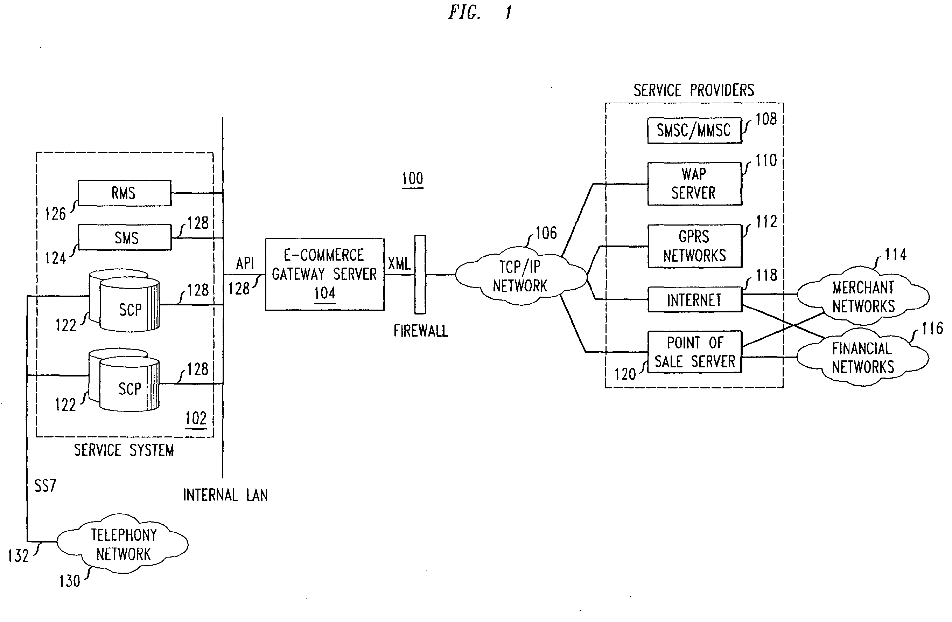

Turning now to the drawings and referring initially to FIG. 1, there is shown an intelligent network-based e-commerce system 100 according to one embodiment of the present invention. The e-commerce system 100 comprises a service system 102 connected via a gateway server 104 to a packet network 106 (as shown, a TCP/IP network). The packet network 106 interfaces to various e-commerce merchants and/or service providers (sometimes termed "content providers") that may request access to the service system 102 to perform e-commerce transactions. As shown, the content providers include short message service center or multiple media service center ("SMSC/MMSC") 108, Web Application Platform (WAP) server 110, General Packet Radio Service (GPRS) networks 112, merchant networks 114 and financial networks 116. As shown, the merchant and financial networks 114, 116 access the service system via the Internet 118 or "point of sale" servers 120. Subscribers of the prepaid e-commerce service (i.e., e-commerce customers) may also access the service system via the Internet 118 or point of sale servers 120.

As will be appreciated, the content providers shown in the e-commerce system 100 do not represent an exhaustive list but generally depict a wide range of options available to prepaid customers. The types of services/content that may be available from the content providers include, for example but not limitation, purchases of goods, movie tickets, telephony services, short message service, WAP service, Internet usage, Internet gaming and music or file uploads/downloads. The customer interacts with the service provider with communication devices (not shown) including but not limited to mobile phones, wireless hand-held devices, kiosks, point-of-service clients, Internet screens, etc.

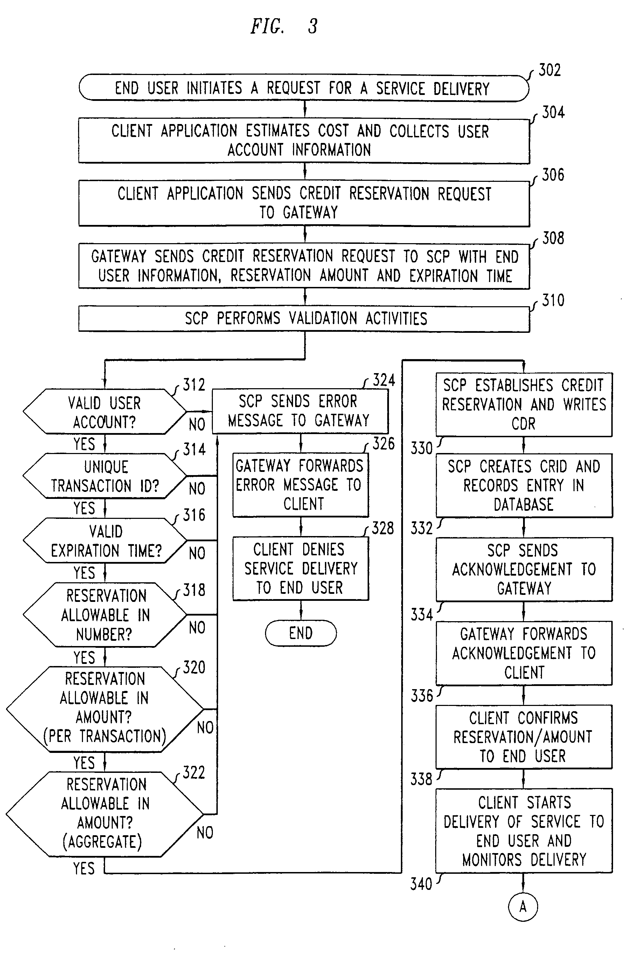

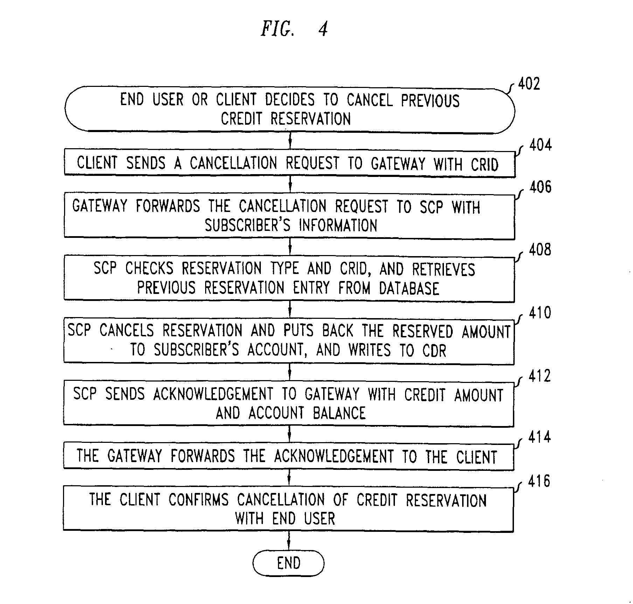

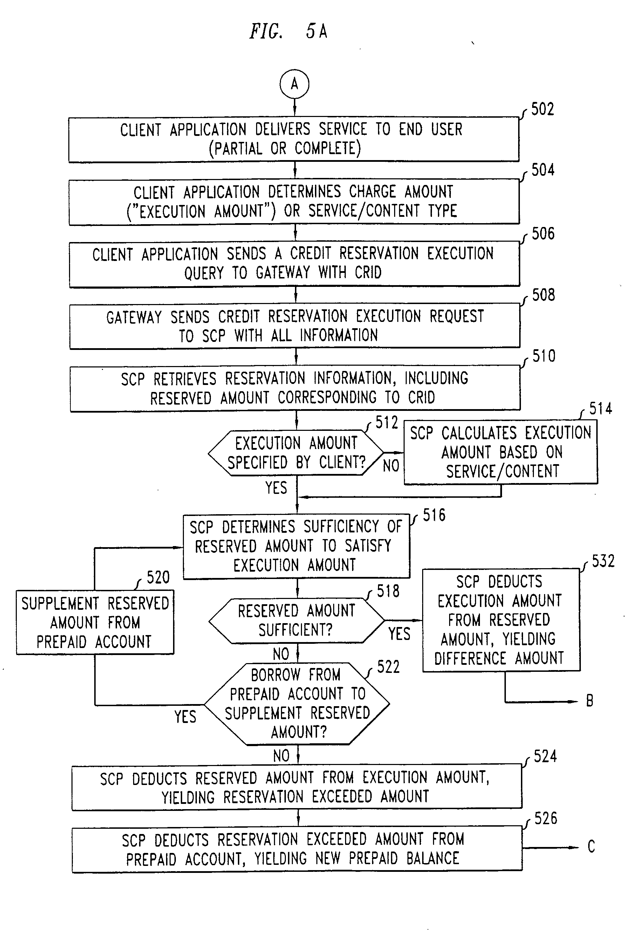

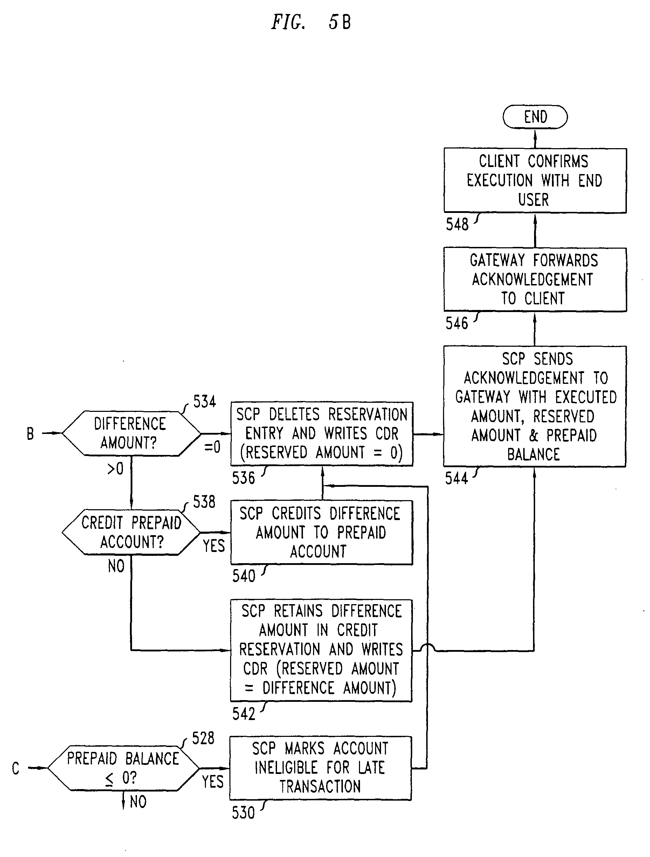

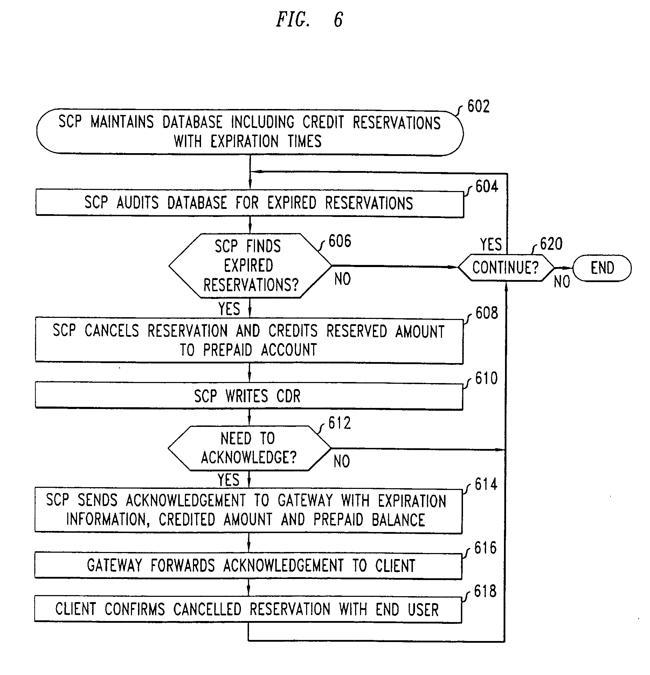

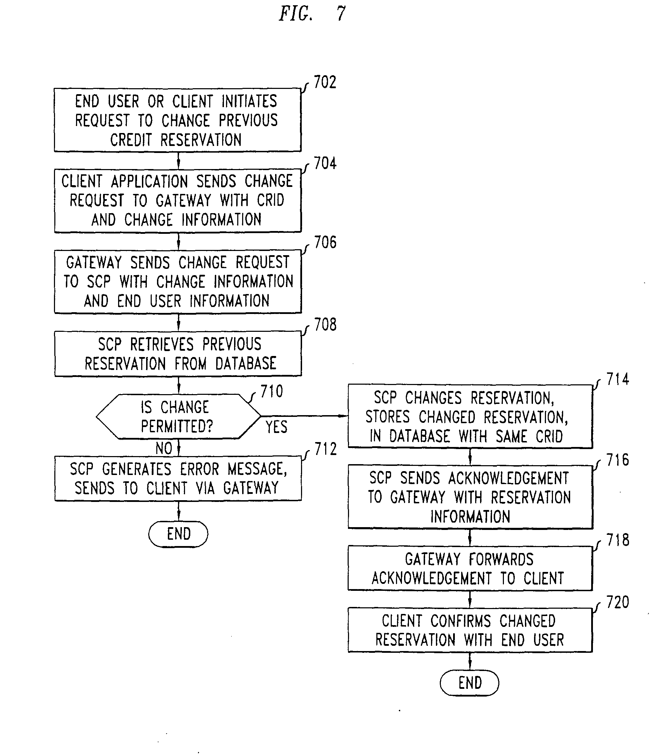

The service system 102 comprises a plurality of Service Control Points ("SCPs") 122, a service manager system ("SMS") 124 and a recharge management system ("RMS") 126. Each of these devices includes respective processors and memory (not shown) for effecting certain transactions relating to the services and capabilities of the service system 102. According to principles of the present invention, one of these services is a credit reservation service whereby service providers can establish reservation(s) of credit from within prepaid subscriber accounts. To that end, as will be described in greater detail hereinafter, the service system 102 supports establishing credit reservations (FIG. 3), canceling previous credit reservations (FIG. 4), using a credit reservation to obtain payment for services (FIG. 5), auditing to remove expired reservations (FIG. 6) and modifying previous credit reservations (FIG. 7).

The SCPs 122 maintain subscriber accounts and serve in the role of a "portal" to subscriber balance(s), thereby enabling service (content) providers to establish, access and modify credit reservations (and, as necessary, to access and modify the balance (i.e., the non-reserved portion) of the prepaid subscriber account(s)). In the preferred embodiment, credit reservations are associated with a particular service provider and, once established, are accessible by that service provider and no other service providers. In such manner, a service (content) provider may rely upon a credit reservation to obtain payment for service(s) without fear of the credit reservation being used to effect payment to other content providers. In one embodiment, a mated pair of SCPs is provided for purposes of redundancy; wherein for each subscriber, there is a designated "primary" SCP and "secondary" SCP.

The SCPs are connected to the gateway server 104 via links 128 (as shown, Application Programmable Interface (API) link(s)). One example of API link is Lightweight Directory Access Protocol (LDAP). The SCPs 122 are further connected to a telephony network 130 via links 132 (as shown, SS7 telephony signaling links) such that the service system 102 may support credit reservations via the telephony network 130 in addition to the TCP/IP network 106. The telephony network 130 may comprise a wired or wireline network using SS7 links.

The SMS 124 performs provisioning, administration and management functions for the service system 102. Generally, this includes generating and/or maintaining subscriber and service information associated with the service system 102 and downloading the information as required to the SCPs 122. The SMS 124 communicates with the SCPs via an API link 128 or TCP/IP interface (not shown) (e.g., CORBA over TCP/IP). More specifically, duties of the SMS 124 include: establishing new subscriber accounts and/or maintaining existing accounts (including subscriber IDs, credit amounts); mapping subscriber IDs to primary/secondary SCPs; identifying various attributes of the subscribers (for example, age, sex, language type, currency type, usage data, service preferences and/or restrictions); and generating comprehensive reports of account/usage information. In one embodiment, the duties of the SMS 124 do not include establishing credit reservations―that is the function of the SCPs 122―but nevertheless, the SMS 124 is operable to receive information regarding credit reservations from the SCPs 122 and generate reports of account/usage information accordingly.

The RMS 126 facilitates periodic recharging or replenishing of the subscriber accounts and communicating the recharging information as required to the SMS 124. The RMS 124 communicates with the SMS 124 via an API link 128 or TCP/IP interface (not shown).

In one embodiment, the gateway server 104 serves as an interface for service (content) providers and/or subscribers to access the service system 102 (and hence, to obtain and access credit reservations and/or to access the balance of prepaid subscriber account(s)). The gateway server 104 is a functional element that may reside in one or more physical devices. As shown, all network-based service providers 108-120 access the gateway server via the TCP/IP network 106, whereas the telephony network 130 may access the service system 102 directly, using SS7 protocol. The TCP/IP network 106 is adapted for transporting IP messages (or "datagrams") via one or more routers (not shown). As will be appreciated, alternative configurations are possible. For example, certain service (content) providers 108-120 may interface directly to the gateway server 104 (i.e., via links/networks other than the TCP/IP network 106).

In one embodiment, messages are communicated between the gateway server and service (content) providers 108-120 using extensible Markup Language (XML). XML is the universal format for structured documents and data on the Web. The XML protocol thus gives service providers and subscribers a great deal of flexibility to access the subscriber account information. For example, service providers or subscribers may access the account information from Internet screens, point-of-sale computing devices, wireless devices or generally any device that is capable of communicating with the gateway server 104 via XML protocol. As will be appreciated, protocols other than XML could be used.

In one embodiment, the gateway server 104 performs primary functions of protocol conversion for e-commerce operations, subscriber mapping to the SCP(s), system overload control and operations logging. The protocol conversion function comprises translating XML queries or transaction requests from service (content) providers or subscribers into the API format supported by the service system 102; and conversely, translating API responses of the service system 102 to XML format for delivery to service (content) providers 108-120 or subscribers. The mapping function comprises maintaining a database identifying the primary and secondary SCP for each subscriber for which an e-commerce transaction has been performed. For subscribers who are first-time users of the e-commerce system, the gateway server queries the SMS 124 to identify the primary and secondary SCP and thereafter maintains the information in a mapping table/database. Thereafter, upon receiving a query or transaction relating to a particular subscriber, the gateway server consults the mapping table to determine the primary and secondary SCP (hence, freeing the service provider and subscribers from such burden). Optionally, the gateway server may periodically delete mappings of subscribers who are inactive for a period of time. Moreover, the gateway server may periodically re-identify primary and secondary SCPs if/when failures occur in the originally identified primary or secondary SCPs. In one embodiment, if there is an automatic provisioning of new entries of subscribers on the gateway server via SMS (i.e, SMS automatically provisions new subscribers in the mapping table at the gateway), the gateway will return error message to the client systems when receiving an unrecognized subscriber ID in incoming requests. The gateway server will monitor the traffic load to the SCP(s). If the SCP is overloaded with e-Commerce transactions, the gateway puts incoming requests in a queue. The logging function logs all requests and indicates the outcome (i.e., success or failure) of each request.

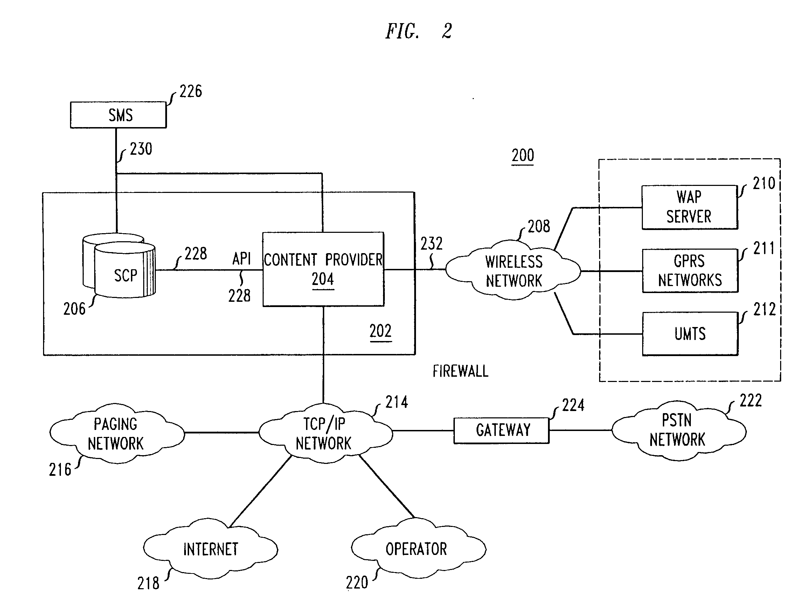

Turning now to FIG. 2, there is shown an intelligent network-based e-commerce system 200 providing content service according to one embodiment of the present invention. Generally, the system 200 is an alternative to the system 100 of FIG. 1 that is particularly adapted for computing costs and billing for content-based service and which does not rely on a gateway server. Rather, as will be described in greater detail hereinafter, the system of FIG. 2 relies upon a content provider 204 that interfaces directly with the SCP (i.e., without a gateway server). The content provider may comprise, for example, a short message service center ("SMSC") or a multiple media service center ("MMSC). In such system, the content provider 204 itself is a gateway to the SCP. For convenience, the term "gateway device" (or "gateway") will be understood, unless specified otherwise, to encompass the gateway server 104 (FIG. 1), content provider 204 (FIG. 2) or any other alternative interface to the service system 102 (or 202).

Similarly to the system of FIG. 1, the system 200 supports credit reservation service whereby service (content) providers can establish reservation(s) of credit from within prepaid subscriber accounts. The system includes a service system 202 comprising one or more Service Control Points ("SCPs") 206 which perform substantially the same functions of the SCPs 122 described in relation to FIG. 1. In the embodiment of FIG. 2, the content provider 204 directly accesses the SCPs 206 (and hence, is able to obtain and access credit reservations and/or to access the balance of prepaid subscriber account(s) without requiring a gateway server).

The content provider 204 is linked to various services/providers via one or more networks. As shown, the networks include a wireless network 208 that interfaces to Web Application Platform (WAP) server 210, General Packet Radio Service (GPRS) networks 211 and Universal Mobile Telecommunications System (UMTS) networks 212; and a TCP/IP network (more generally, "packet network") 214 that interfaces to entities including a paging network 216, the Internet 218, operator bureau 220 and the Public Switched Telephone Network (PSTN) 222. The operator bureau is an entity including one or more operators that is operable to broadcast short messages to all end users, or a subset of end users, as may be requested by service providers for advertisements, etc. The PSTN 222 is connected to the packet network 214 via a telephony gateway 224. Subscribers of the e-commerce service (i.e., e-commerce customers) may also access the service system, for example, via the Internet 218.

The content provider 204 (in the embodiment where the content provider comprises an SMSC/MMSC) provides, in addition to its gateway function, the ability for subscribers to send and receive short text messages and or multiple media messages using wireless device(s) (not shown). In one embodiment, the basic applications of the SMSC/MMSC include voice and fax mail notification, inbound digital paging, web-based messaging, e-mail connectivity, operator bureau connectivity, desktop messaging support, information services, mobile-originated text messaging, mobile-originated e-mail and broadcast messaging. In one embodiment, the SMSC comprises a Wireless Intelligent Network (WIN) SMSC available from Lucent Technologies.

FIGs. 3-7 are flowcharts showing various credit reservation transactions supported by the e-commerce system 100 (FIG. 1) or 200 (FIG. 2). These transactions include establishing credit reservations (FIG. 3), canceling previous credit reservations (FIG. 4), using a credit reservation to obtain payment for services (FIG. 5), auditing to remove expired reservations (FIG. 6) and modifying previous credit reservations (FIG. 7). The steps of FIGs. 3-7 are implemented, where applicable, using stored software routines within a gateway device (i.e., gateway server 104 or SMSC 204) or SCP(s) 122, 206 of the e-commerce system 100 or 200.

Turning to FIG. 3, there is shown a flowchart of a method for obtaining a credit reservation from a subscriber prepaid account according to one embodiment of the present invention. Generally, this method is used by a service provider to obtain an amount of credit that is reserved for payment, if at all, to the service provider having obtained the credit reservation (i.e., not to any other service providers). In such manner, a service provider obtains assurance that it will be paid at least the amount of the credit reservation before it delivers a service to the subscriber.

For purposes of example, it is presumed the method begins at step 302 responsive to an end user initiating a request for service delivery from the service provider. (Optionally, the service provider might obtain a credit reservation prior to receiving a request for service delivery.) It is further presumed that the end user maintains one or more prepaid accounts with the e-commerce service system 100 or 200. The end user may initiate the request, for example, via the Internet, point-of-sale server, mobile phone, wireless hand-held device or wireline device. The request may be for a service having unclear quantity or measurement. For example, the end user may request streaming audio or video downloads, Internet gaming or generally any content-based service.

At step 304, a client application (e.g., e-commerce software) estimates the cost of the service (or optionally, estimates a level of content (e.g., number or size of messages/packets) associated with the service from which an estimated cost may be derived) and collects information relevant to a prospective credit reservation such as user ID, account code, account indicator, currency, etc. In one embodiment, the client application further determines an expiration time of the prospective credit reservation. As will be appreciated, the expiration time may vary according to the subscriber, type of service and the like. The client application may reside in a server operated by the service provider or by a centralized entity serving multiple service providers.

At step 306, the client application sends a credit reservation request to the appropriate gateway device (e.g., gateway server 104 or content provider 204) including the relevant information. In one embodiment, the request includes a subscriber ID and account code, requesting system ID, transaction ID, requested reservation amount and expiration time. Optionally, indicia of service type, message type, content type and units of service delivery (from which an estimated cost may be derived) may be substituted for the requested reservation amount. In one embodiment, the request is an XML-protocol message.

As will be appreciated, different service providers may have different ID(s), account codes and the like for the same subscriber depending on the different service providers' naming/numbering schemes. For example, for a mobile wireless service provider, the subscriber ID could be a Mobile Station International Subscriber Directory Number (MSISDN) or Mobile Directory Number (MDN) or Mobile Identification Number (MIN) depending on the service provider's network. In one embodiment, the gateway maintains a mapping table that correlates multiple ID(s) to individual subscriber(s), where applicable, to accommodate different subscriber ID(s)/account codes. The gateway consults its mapping table to determine whether subscriber data is found corresponding to the subscriber ID and/or account code identified in the request. In one embodiment, this subscriber data includes an identification of primary or secondary SCP(s) associated with the subscriber account. For convenience, the term "SCP" will hereinafter refer to the acting SCP(s) associated with the subscriber account, including primary and/or secondary SCP(s) of the system of FIG. 1 or FIG. 2.

At step 308, the gateway sends a credit reservation request to the SCP. In one embodiment, the request includes generally the same information received from the client application at step 306 (i.e., a subscriber ID and account code, requested reservation amount or service type and content, requesting system ID, transaction ID, and expiration time). The gateway may transform, filter or supplement information provided from the client application as may be appropriate. For example, if the credit reservation request includes indicia of service type, message type, content type and units of service delivery without a requested reservation amount, the gateway may query the SCP for an amount corresponding to the estimated content. As another example, the gateway may transform a subscriber ID from a service provider format to a format recognized by the SCP. As yet another example, the gateway (or alternatively, the SCP) may supply an expiration time associated with the credit reservation if not provided by the service provider.

At step 310, the SCP performs validation/authorization activities related to the credit reservation request. In one embodiment, the validation activities include at least one of the following: determining whether the subscriber is valid (e.g., the subscriber has a valid prepaid account and is authorized to partake in the requested service); whether the transaction ID and/or requesting system ID is unique (i.e., so as to make fraudulent access less likely); whether the requested expiration time is an allowed value; whether the requested reservation, plus any other outstanding reservations, will exceed an allowed total number of reservations; whether the requested reservation amount does not exceed an allowed value (e.g., an allowed portion of the account balance)); and whether the requested reservation amount, if added to other outstanding reservations, will exceed an allowed aggregate value (e.g., the total value of all reservations does not exceed the prepaid account balance). In one embodiment, the validation activities are performed in sequence and their outcome(s), determined at decision blocks 312-322, determine whether the credit reservation will be accepted or denied. However, as will be appreciated, the order in which the validation activities are performed (and indeed, the validation activities themselves) may be varied as provisioned by the operator of the system 100 or 200.

In one embodiment, if any of the validation activities result in a negative outcome, the credit request is unauthorized; the SCP sends an error message to the gateway at step 224 and further validation activities are ceased. For example, if the subscriber is determined at block 312 not to have a valid account or is not authorized to partake in the requested service, the SCP does not check the transaction ID or perform any other remaining validation activities. Otherwise, until such time (if at all), that a negative outcome is encountered, the SCP continues to perform the remaining validation activities in sequence. In the event a negative outcome is encountered and the SCP sends an error message to the gateway, the gateway forwards the error message to the service provider at step 326. Having unsuccessfully requested a credit reservation, the service provider denies service delivery to the end user at step 328. Optionally, the service provider may disclose the error conditions that led to denying service to the end user.

In the event positive outcomes are obtained in each of the validation activities, the credit request is authorized and the SCP establishes a credit reservation at step 330. More particularly, in one embodiment, the SCP deducts the reservation amount from a non-reserved portion of the subscriber's prepaid account and transfers the amount into a reserved account, yielding the credit reservation. The SCP records information relating to the credit reservation transaction in a call detail record (CDR).

At step 332, the SCP creates a credit reservation ID ("CRID") associated with the credit reservation and stores the GRID in a database along with related information. In one embodiment, the GRID is mapped to information including: reserved amount, expiration time, subscriber ID, transaction ID, requesting system ID, and account indicator (referring to the prepaid account).

At step 334, the SCP sends an acknowledgement to the gateway. In one embodiment, the acknowledgement includes the CRID and the reserved amount. At step 336, the gateway forwards the acknowledgement to the service (content) provider. (If necessary, the gateway converts the format of the acknowledgement from a format of the SCP to a format recognized by the client). At step 338, the client/service (content) provider records the CRID and reserved amount in its database and confirms the successful reservation with the end user. At step 340, the service (content) provider starts delivery of the requested service to the end user and monitors the delivery status. In such manner, the service (content) provider has guaranteed prior to service delivery that the reserved amount is available for payment. Optionally, (at the risk that a credit reservation might not be obtained) the service provider may deliver all or part of the requested service prior to requesting the credit reservation.

Turning to FIG. 4, there is shown a flowchart of a method for canceling a previously established credit reservation. The method presumes at step 402 that an end user or client initiates a request to cancel a previously established reservation. This may occur, for example, if a client no longer wishes to obtain the service for which the reservation was obtained, or perhaps wishes to use an alternative form of payment. At step 404, the service (content) provider sends a cancellation request message, indicating the CRID of the credit reservation to be cancelled, to the gateway. Optionally, the cancellation request may include parameters such as reservation type, subscriber ID, and so forth in addition to the CRID. The gateway receives the cancellation request message and, at step 406, forwards the cancellation request to the appropriate SCP.

At step 408, the SCP retrieves the information corresponding to the GRID from its database. In one embodiment, as described in relation to FIG. 3, the retrieved information comprises GRID, reserved amount, expiration time, subscriber ID, transaction ID, requesting system ID, and account indicator (referring to the prepaid account).

At step 410, the SCP cancels the credit reservation. (It is presumed at step 410 that the request to cancel is valid, i.e., that the request is received from a subscriber or service provider that is authorized to cancel the reservation, by virtue that the request includes the CRID which is known only to authorized subscribers or service providers). In one embodiment, this comprises the SCP transferring the reserved amount of the credit reservation back into the subscriber's prepaid account, yielding zero balance in the credit reservation and a restored balance in the prepaid account. The SCP records information relating to the transaction in a call detail record (CDR).

At step 412, the SCP sends an acknowledgment to the gateway. In one embodiment, the acknowledgement includes the GRID, the canceled reservation amount and the account balance of the restored prepaid account. At step 414, the gateway forwards the acknowledgement to the service (content) provider. At step 416, the client/service (content) provider confirms the successful cancellation of the credit reservation with the end user. Optionally, the service (content) provider may inform the end user of the canceled reservation amount and the account balance of the restored prepaid account.

FIG. 5 is a flowchart of a method for obtaining payment for a service delivery using (or "executing") a credit reservation. The method presumes that a credit reservation has been established for an end user prior to service delivery (as described in relation to FIG. 3) and information including CRID, reserved amount, expiration time, subscriber ID, transaction ID, requesting system ID, and account indicator (referring to the prepaid account) is maintained by an SCP. The method may be used in the system of FIG. 1 or FIG. 2.

At step 502, the service (content) provider initiates execution of the credit reservation. In one embodiment, this occurs upon completion or partial completion of the service delivery to the end user. At step 504, the service (content) provider determines a charge amount ("execution amount") or optionally, determines a service type, message type, content type and level of content associated with the service (e.g., number or size of messages/packets) from which an execution amount may be derived.

At step 506, the service (content) provider sends a credit reservation execution query to the gateway indicating the CRID of the credit reservation to be executed, the execution amount or service/content information. Optionally, an upper limit may be provisioned for the number of executions that will be supported for a particular reservation. In one embodiment, this limit value is specified in the execution query. For example, a limit value of 1 would indicate that only a single execution will be supported, a limit value of 2 would indicate that two executions will be supported, and so forth.

The gateway receives the execution query and, at step 508, forwards an execution request associated with the CRID to the appropriate SCP. At step 510, the SCP retrieves the information corresponding to the CRID from its database. In one embodiment, the retrieved information comprises CRID, reserved amount, expiration time, subscriber ID, transaction ID, requesting system ID and account indicator (referring to the prepaid account).

If the execution amount is not specified in the query, determined at block 512, the SCP calculates the execution amount at step 514 based upon service type, message type, content type and level of content of delivery. Methods for calculating charge amounts based on service/content type are described in related application Bartter 3. Otherwise, if the execution amount is specified in the query, the process proceeds to step 516.

At step 516, the SCP determines whether the amount of the credit reservation (i.e., the reserved amount) is sufficient to satisfy the execution amount. A positive or negative determination is made at step 518 accordingly. If, at step 518, the reserved amount is determined to be insufficient to satisfy the execution amount, a decision is made at block 522 whether to borrow from the non-reserved portion of the subscriber's prepaid account to supplement the reserved amount. If yes, the reserved amount is supplemented from the prepaid account at step 520, defining a supplemented reserved amount and reduced prepaid balance. The transaction is recorded as appropriate and the process returns to step 516 to determine the sufficiency of the now supplemented reserved amount, and so forth until such time as the reserved amount becomes sufficient to satisfy the execution amount or the reserved amount will not be supplemented (or further supplemented) from the prepaid account and is finally determined to be insufficient to satisfy the execution amount.

In the latter case (i.e., the reserved amount is less than the execution amount), the process proceeds to step 524 where the SCP deducts the reserved amount from the execution amount, yielding a reservation exceeded (or "surpass") amount. For convenience, it is presumed that step 524 also includes the step of effecting a payment to the service provider from the reserved amount. In practice, however, such payment occurs several minutes or hours after the transaction (e.g., at close of business) as is customary for banking transactions.

Following step 524, the service (content) provider is guaranteed payment from the reserved account but is still owed an amount of payment for services that exceeds the reserved amount. In one embodiment, to the extent funds are available in the subscriber's (non-reserved) prepaid account, the SCP will effect a second payment to the service (content) provider from the prepaid account. The combination of first and second payments may or may not satisfy the execution amount. As will be appreciated, the first payment (i.e., the reserved amount) and the second payment may be effected simultaneously or at different times.

At step 526, the SCP deducts the reservation exceeded amount from the prepaid account, yielding a new prepaid balance. It is presumed that step 526 also includes the step of effecting payment (i.e., the "second payment") to the service provider. At step 528, it is determined whether the new prepaid balance is less than or equal to zero. If the prepaid balance is greater than zero, this means the second payment has satisfied the surpass amount (and hence the combination of first and second payments have satisfied the execution amount) and the subscriber still has a remaining balance in the non-reserved prepaid account. There is no remaining balance in the credit reservation and the process proceeds to step 536. The SCP at step 536 deletes the credit reservation entry and records information relating to the transaction in a CDR.

If the prepaid balance is zero, the second payment has satisfied the surpass amount but the subscriber has no remaining balance; and if the prepaid balance is less than zero, the second payment has not fully satisfied the surpass amount (and hence the combination of first and second payments have not satisfied the execution amount) and the subscriber has no remaining balance. In one embodiment, if the subscriber has zero (or negative) balance at step 528, the SCP marks the account ineligible for a later transaction. Of course, it is possible the subscriber may replenish the account at a later time.

As has been described, the preceding steps 522-530 are followed in the instance that the reserved amount is insufficient to satisfy the execution amount. If, at step 518, it is determined that the reserved amount is sufficient to satisfy the execution amount, the process proceeds to step 532 where the SCP deducts the execution amount from the reserved amount, yielding a difference amount. For convenience, it is presumed that step 532 also includes the step of effecting a payment to the service provider of the execution amount. Hence, the difference amount defines a remaining balance in the credit reservation after payment of the execution amount. At step 534, it is determined whether the difference amount is greater than or equal to zero. (The difference amount, as defined herein, will never be less than zero because it calculated after having determined that the reserved amount is sufficient to satisfy the execution amount).

If the difference amount is zero (i.e., no remaining balance in the credit reservation), the SCP at step 536 deletes the reservation entry and records information relating to the transaction in a CDR. If the difference amount is greater than zero, the remaining balance may be retained in the credit reservation or credited to the subscriber's prepaid account. At step 538, it is determined whether to credit the prepaid account. In response to a positive determination at step 538, the SCP credits the difference amount to the prepaid account at step 540 and proceeds to step 536 to delete the reservation entry and write a CDR. In response to a negative determination at step 538, the SCP retains the difference amount in the credit reservation at step 542 and records information relating to the transaction in a CDR.

After having deleted the reservation entry at step 536 or having retained the credit reservation at step 542, the SCP sends an acknowledgment to the gateway at step 544. In one embodiment, if the reservation is deleted, the acknowledgment includes the executed amount and the remaining prepaid balance; if the reservation is retained, the acknowledgment includes the CRID, executed amount, remaining reserved account balance and remaining prepaid balance (and optionally, remaining number of executions). At step 546, the gateway forwards the acknowledgement to the service (content) provider. At step 548, the client/service (content) provider confirms the execution of the credit reservation with the end user. In one embodiment, the service (content) provider informs the end user of the executed amount and the remaining prepaid balance and, if the reservation is retained, the GRID, remaining reserved account balance and optionally, the remaining number of executions.

Turning to FIG. 6, there is shown a flowchart of a method for auditing a credit reservation database to find and cancel expired credit reservations. The method of FIG. 6 may be implemented, for example, in the system of FIG. 1 or FIG. 2, where the SCP(s) 122 or 206 maintain a database of credit reservations. The method starts at step 602 with the SCP maintaining a database including credit reservations with expiration times. In one embodiment, the database comprises, for each credit reservation, a credit reservation ID (CRID) mapped to a reserved amount, expiration time, subscriber ID, transaction ID, requesting system ID, and account indicator (referring to the prepaid account). A method for establishing the credit reservations is described in relation to FIG. 3.

At step 604, the SCP searches the database for expired reservations. In one embodiment, this is accomplished periodically at given intervals of time. As will be appreciated, the interval may be on the order of seconds, minutes, hours or even days. An expired reservation is either found or not found at step 606. If the SCP does not find an expired reservation, the process either ends or continues at step 620. If the process continues, a further search is performed at the next interval, and so forth until such time as an expired reservation is found or the process ends.

In one embodiment, if the SCP finds an expired reservation at step 606, the SCP cancels the reservation and credits the reserved amount back into the subscriber's prepaid account at step 608. The SCP writes the information into a call detail record (CDR) at step 610. The SCP determines at step 612 whether it should send an acknowledgment to the service (content) provider. In one embodiment, this determination is based on a pre-provisioned flag within the SCP software. If the flag is set to NO, the process proceeds to step 620 and either continues with another search interval or ends. If the flag is set to YES, the SCP sends an acknowledgment to the gateway at step 614. In one embodiment, the acknowledgment includes the reason for canceling the reservation, the credited amount and the new prepaid balance. At step 616, the gateway forwards the acknowledgement to the service (content) provider. At step 618, the client/service (content) provider confirms the expired/canceled credit reservation with the end user. In one embodiment, the service (content) provider informs the end user of the reason for canceling the reservation, the credited amount and the new prepaid balance. If the service (content) provider did not deliver or partially delivered a service that was to be paid from the now expired credit reservation, the service (content) provider may cancel delivery upon cancellation of the expired reservation.

FIG. 7 is a flowchart of a method for changing a previously established credit reservation. The method presumes at step 702 that an end user or service (content) provider initiates a request to change a previously established reservation. This may occur, for example, if a client or service (content) provider wishes to increase (or decrease) the reservation amount or prolong (or reduce) the expiration time of an existing reservation.

At step 704, the service (content) provider sends a change request message, indicating the CRID of the credit reservation to be changed, the parameter to be changed (and its new value), to the gateway. Optionally, the change request may further include parameters such as reservation type, subscriber ID, and so forth. The gateway receives the change request message and, at step 706, forwards the change request to the appropriate SCP.

At step 708, the SCP retrieves the information corresponding to the CRID from its database. In one embodiment, as described in relation to FIG. 3, the retrieved information comprises CRID, reserved amount, expiration time, subscriber ID, transaction ID, requesting system ID, and account indicator (referring to the prepaid account). At step 710, the SCP determines whether the requested change is allowed based on service provisioning and the nature of the change. For example, if the end user or client/service (content) provider wishes to increase the reserved amount in the request, the SCP will check the subscriber account lifecycle and balance to determine whether the requested changes is allowed. Also, for example, the SCP may not allow a requested expiration time if it would exceed a threshold amount. Optionally, the threshold may vary for different requested services. For example, the maximum allowable expiration time for music downloads may differ from the maximum allowable expiration time for online gaming services.

If the requested change is not allowed, the SCP at step 712 generates an error message and sends it to the gateway which, in turn, sends the error message to the service provider. The service provider may thereafter inform the end user of the error.

If the requested change is allowed, the SCP at step 714 changes the credit reservation, changes the database information as required and records information relating to the transaction in a CDR. In one embodiment, the changed reservation is stored under the same CRID as the previous reservation. At step 716, the SCP sends an acknowledgment to the gateway including the CRID and the changed parameter information. At step 718, the gateway forwards the acknowledgement to the service (content) provider. At step 720, the client/service (content) provider confirms the successful change of the credit reservation with the end user.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. In an electronic commerce system maintaining at least one prepaid account for a customer, a method for establishing from the prepaid account, a credit reservation dedicated for payment to a service provider, the method comprising:
receiving a credit reservation request from the service provider, the credit reservation request including at least one of a customer ID and account code associated with the customer;
determining a reservation amount for the credit reservation;
determining an expiration time for the credit reservation;
determining an authorization status of the credit reservation request; and
if the credit reservation is authorized, establishing the credit reservation.

2. The method of claim 1, wherein the electronic commerce system comprises a gateway device operably connected to a service control point (SCP), the method comprising:
receiving, by the gateway device, the credit reservation request;
sending, from the gateway device to the SCP, a credit reservation request message including at least one of the customer ID and account code, reservation amount and expiration time;
determining, by the SCP, the authorization status of the credit reservation request; and
if the credit reservation is authorized, transferring, by the SCP, the reservation amount from the at least one prepaid account of the customer to a credit reservation account, yielding an established credit reservation, and maintaining a record of the established credit reservation, the record including a credit reservation identifier (GRID), the reserved amount and indicia of the at least one prepaid account.

3. The method of claim 2, further comprising:
if the credit reservation is authorized, sending an acknowledgment message to the service provider, the acknowledgment message including at least the GRID of the established credit reservation; and
if the credit reservation is unauthorized, sending an error message to the service provider.

4. The method of claim 2, further comprising:
receiving, by the gateway device, a request to cancel an established credit reservation, the request including at least the CRID of the established credit reservation;
forwarding the request from the gateway device to the SCP;
retrieving, by the SCP, the record of the established credit reservation account corresponding to the CRID; and
transferring, by the SCP, the reserved amount from the credit reservation account to the at least one prepaid account, yielding a canceled credit reservation and a restored balance of the at least one prepaid account.

5. The method of claim 2, further comprising:
receiving, by the gateway device, a request to change the reservation amount of an established credit reservation, the request including at least the CRID of the established credit reservation and a new reservation amount;
forwarding the request from the gateway device to the SCP;
retrieving, by the SCP, the record of the established credit reservation account corresponding to the CRID;
determining, by the SCP, an authorization status of the request; and
if the request is authorized, modifying, by the SCP, the reservation amount, yielding the new reservation amount and modifying the record of the credit reservation to reflect the new reservation amount.

6. The method of claim 2, further comprising:
receiving, by the gateway device, a request to change the expiration time of an established credit reservation, the request including at least the CRID of the established credit reservation and a new expiration time;
forwarding the request from the gateway device to the SCP;
retrieving, by the SCP, the record of the established credit reservation account corresponding to the CRID;
determining, by the SCP, an authorization status of the request; and
if the request is authorized, modifying, by the SCP, the expiration time, yielding the new expiration time and modifying the record of the credit reservation to reflect the new expiration time.

7. In an electronic commerce system having established a credit reservation for a customer from a prepaid account, the electronic commerce system maintaining a record of the credit reservation including a credit reservation identifier (CRID), a reserved amount and indicia of the prepaid account, a method comprising:
receiving a credit reservation execution request from a service provider, the execution request including at least the CRID of the credit reservation;
determining an execution amount associated with the execution request;
determining a sufficiency of the reserved amount to satisfy the execution amount; and
if the reserved amount is sufficient to satisfy the execution amount, deducting the execution amount from the reserved amount, yielding a difference amount in the credit reservation; and
effecting payment to the service provider from the execution amount.

8. The method of claim 7, wherein the step of determining a sufficiency of the reserved amount to satisfy the execution amount comprises:
supplementing the reserved amount from at least a portion of the prepaid account, yielding a supplemented reserve amount; and
determining the supplemented reserved amount is sufficient to satisfy the execution amount.

9. The method of claim 7 comprising, if the reserved amount is insufficient to satisfy the execution amount:
deducting the reserved amount from the execution amount, yielding a reservation exceeded amount;
effecting a first portion of payment to the service provider from the reserved amount; and
effecting a second portion of payment to the service provider from the prepaid account.
